(19) Europäisches Patentamt
European Patent Office
Office européen des brevets

(11) Veröffentlichungsnummer: **0 160 907**
**B1**

(12) # EUROPÄISCHE PATENTSCHRIFT

(45) Veröffentlichungstag der Patentschrift: **26.10.88**

(51) Int. Cl.⁴: **C 08 G 18/10**, C 08 G 18/65, C 08 G 18/66

(21) Anmeldenummer: **85105167.2**

(22) Anmeldetag: **27.04.85**

(54) **In aromatischen Kohlenwasserstoffen lösliche oder gelöste Polyurethane, Verfahren zu ihrer Herstellung und ihre Verwendung.**

(30) Priorität: **11.05.84 DE 3417475**

(43) Veröffentlichungstag der Anmeldung: **13.11.85 Patentblatt 85/46**

(45) Bekanntmachung des Hinweises auf die Patenterteilung: **26.10.88 Patentblatt 88/43**

(84) Benannte Vertragsstaaten: **BE DE FR GB IT NL**

(56) Entgegenhaltungen:
**FR - A - 2 283 918**
**FR - A - 2 304 652**

**CHEMICAL ABSTRACTS, Band 85, Nr. 20, November 1976, Seite 65, Nr. 144359b, Columbus, Ohio, US; ANONYMUS: "Novel isocyanate containing compositions, process for their preparation and polyurethanes derived therefrom" & RES. DISCL. 1976, 148, 55**

(73) Patentinhaber: **BAYER AG, Konzernverwaltung RP Patentabteilung, D-5090 Leverkusen 1 Bayerwerk (DE)**

(72) Erfinder: **Noll, Klaus, Dr., Morgengraben 6, D-5000 Köln 80 (DE)**
Erfinder: **Pedain, Josef, Dr., Haferkamp 6, D-5000 Köln 80 (DE)**
Erfinder: **Schönfelder, Manfred, Dr., Höhenstrasse 126, D-5090 Leverkusen 3 (DE)**

**EP 0 160 907 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Polyurethanharze aus aromatischen Diisocyanaten, die in unpolaren oder schwach polaren Lösungsmitteln, vorzugsweise aromatischen Kohlenwasserstoffen oder diese enthaltenden Lösungsmittelgemischen, löslich sind oder in ihnen hergestellt werden können.

Das Verfahren zu ihrer Herstellung aus höhermolekularen Dihydroxyverbindungen, Diisocyanaten, Diol-Kettenverlängerungsmitteln und gegebenenfalls monofunktionellen Kettenabbrechern ist durch die alleinige oder anteilweise Verwendung von 2,2,4-Trimethyl-pentandiol-1,3 als Kettenverlängerungsmittel gekennzeichnet.

Sie werden als Beschichtung bzw. als pigmenthaltige Überzüge, insbesondere als magnetisierbare Teilchen enthaltende, gegebenenfalls vernetzbare Bindemittelschichten bzw. Überzüge auf Folien, welche als Informationsträger geeignet sind, verwendet.

Lineare Polyurethane aus Dihydroxyverbindungen und Diisocyanaten sind seit langer Zeit bekannt und vielfach in der Literatur beschrieben. In der Regel sind es segmentierte, kettenförmige Hochpolymere, die aus Makrodiolen, Diisocyanaten und niedermolekularen Kettenverlängerern aufgebaut sind. Eine Klasse dieser Polymeren umfasst die aus aromatischen Diisocyanaten hergestellten Polyurethane, die als Kettenverlängerer nahezu ausschliesslich Diole enthalten. Im allgemeinen sind solche Polyurethane nur in Lösungsmitteln löslich, die zumindest anteilig hochpolare Substanzen enthalten, wie etwa Dimethylformamid, Dimethylsulfoxid, N-Methylpyrrolidon. Solche Lösungsmittel sind besonders bei unsachgemässer Handhabung toxikologisch und ökologisch nicht unbedenklich und erfordern kostspielige Rückgewinnungsanlagen. Auch sind sie in der immer grössere Bedeutung gewinnenden Lackierung von Kunststoffen ungeeignet, da sie die Oberflächen von Kunststoffgegenständen über Gebühr angreifen, teilweise sogar auflösen. Die Folge hiervon sind Veränderungen der Oberflächenbeschaffenheit (Glätte und Glanz), aber auch Verlust der Dimensionsstabilität oder bestimmter Strukturen (etwa der von Schaumstoffen mit integrierter fester Haut). Für viele Einsatzgebiete wird daher heutzutage die Verwendung von nicht aggressiven und auch sonst unbedenklichen Lösungsmitteln wie aromatischen Kohlenwasserstoffen, Ketonen und Estern verlangt. Bedauerlicherweise sind aber die meisten der «aromatischen» Polyurethane in solchen Lösern nicht oder nur unvollständig löslich. Es hat daher nicht an Bemühungen gefehlt, diese Polyurethane in geeigneter Weise zu modifizieren, um sie auch in weniger polaren Lösungsmitteln klar und vollständig lösen zu können.

So sind nach DE-A 1 106 958 aromatische Polyurethane erhältlich, die sich in Methylethylketon oder Ethylacetat lösen lassen, wenn zu ihrem Aufbau Diole der allgemeinen Formel

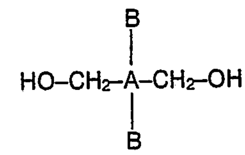

(A = Alkylen, B = H oder $C_1$–$C_5$-Rest) verwendet werden. Allerdings enthalten die so erhaltenen Polyurethane nur einen begrenzten Anteil an Diolen bezogen auf ihren Gehalt an Makrodiolen (0,1 bis 3 Mol auf 1 Mol) und die enthaltenen Produkte weisen für viele Anwendungszwecke keine genügend hohe Härte auf. Erhöht man den Gehalt an Kettenverlängerer, so erhält man Polyurethane mit befriedigenden Eigenschaften, jedoch ist ihre Löslichkeit in den genannten Lösungsmitteln dann auch nicht mehr ausreichend.

DE-A 1 106 959 beschreibt Polyurethane aus Makrodiolen und aromatischen Polyisocyanaten, die mit geradkettigen Diolen mit 2 bis 10 Kohlenstoffatomen kettenverlängert sind und in DMF, Cyclohexanon, Tetrahydrofuran oder Dioxan löslich sind. Hier lassen sich sogar nur 2 Mol Kettenverlängerer auf 1 Mol Makrodiol einsetzen, wenn noch klare Lösungen erhalten werden sollen.

Nach DE-A 1 301 124 werden ähnliche Polyurethane in siedenden chlorierten Aromaten wie Mono- oder Dichlorbenzol hergestellt und anschliessend aus den flüssigen Reaktionsmischungen durch Fällung als Feststoff gewonnen.

In der DE-A 2 442 763 schliesslich werden lineare Polyurethane aus Makrodiolen, 4,4-Diisocyanatodiphenylmethan und seinen Derivaten sowie niedermolekularen verzweigtkettigen Diolen offenbart, in denen die letzte Komponente bevorzugt 2,2-Dimethylpropandiol-1,3 («Neopentylglykol») ist und die sich dadurch auszeichnen, dass sie trotz hohem Verlängerergehalt (3,5–15 Mol Neopentylglykol auf 1 Mol Makrodiol) in cyclischen Ethern wie Tetrahydrofuran oder Dioxan und cyclischen Ketonen wie etwa Cyclohexanon löslich sind. Mit diesen Polyurethanen lassen sich auch Überzüge mit hoher Härte herstellen.

Lösungsmittel wie cyclische Ether oder Ketone bieten nun gegenüber hochpolaren wie Dimethylformamid, Dimethylsulfoxid oder N-Methylpyrrolidon einige Vorteile. Sie sind weniger korrosiv Kunststoffen gegenüber und auch physiologisch weniger bedenklich. Allerdings neigen cyclische Ether zur Bildung von gefährlichen Peroxiden und die Anwendbarkeit von Polyurethanen aus diesen Ethern und cyclischen Ketonen auf Kunststoffen ist nicht universell. Zwar lassen sich solche Lösungen mit Lösern wie nichtcyclischen Ketonen, Estern und Aromaten verschneiden; dies beseitigt jedoch nicht ihre Korrosivität gegenüber Kunststoffen.

In den sehr gut brauchbaren aromatischen Kohlenwasserstoffen waren dagegen bisher, wie oben angegeben, nur Polyurethane mit niedrigem Gehalt an Kettenverlängerern löslich. Für die meisten Einsatzgebiete sind diese Polyurethane wegen ihrer zu niedrigen Härte nicht brauchbar. Gerade für besonders empfindliche Substrate wie Trägerbänder für magnetische Aufzeichnungsmaterialien wäre es aber besonders erstrebenswert, harte und widerstandsfähige Polyurethane nur aus aromatischen Kohlenwasserstoffen als Lösungsmittel aufbringen zu können.

Aufgabe der vorliegenden Erfindung war es daher, Polyurethane mit hoher Härte und mechanischer Strapazierbarkeit zur Verfügung zu stellen, die aus aromatischen Kohlenwasserstoffen appliziert werden können und sich für die Anwendung auf gegenüber Lösungsmitteln empfindlichen Substraten eignen.

Es wurde nun überraschend gefunden, dass solche Polyurethane erhalten werden können, wenn in einem aus Makrodiol, aromatischem Diisocyanat und Kettenverlängerer bestehenden Polyurethan als Kettenverlängerer 2,2,4-Trimethylpentandiol-1,3

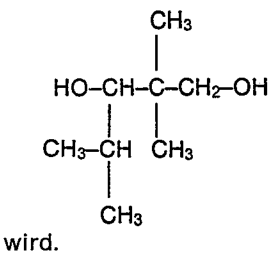

verwendet wird.

Die so erhaltenen Polyurethane lassen sich in reinen aromatischen Kohlenwasserstoffen, in Ketonen und gegebenenfalls Estern oder auch in beliebigen Gemischen dieser Lösungsmittel auflösen.

Ausserdem lassen sich solche Polyurethane auch von vornherein in diesen Lösungsmitteln oder ihren Gemischen herstellen. In beiden Fällen werden klare viskose Lösungen ohne Quellkörper erhalten, die normales rheologisches Verhalten zeigen. Dabei ist überraschend, dass sich diese Polyurethane trotz ihres ausgezeichneten Lösungsverhaltens, speziell in aromatischen Kohlenwasserstoffen, von analogen, mit 2,2-disubstituierten 1,3-Propandiolen nach dem Stand der Technik hergestellten Polyurethanen in der Oberflächenhärte der aus ihnen erhaltenen Filme nicht merklich unterscheiden. In der Vergangenheit waren, wie angeführt, gerade an dieser Eigenschaften zugunsten verbesserter Löslichkeit zuerst Abstriche zu machen.

Gegenstand der vorliegenden Erfindung sind daher im wesentlichen lineare Polyurethane aus höhermolekularen Makrodiolen wie Polyestern, Polyethern und Polycarbonaten mit einem Molgewicht von 400–5000, vorzugsweise 500–3000, aromatischen Diisocyanaten, gegebenenfalls geringen Anteilen an gegenüber Isocyanaten monofunktionellen Verbindungen als Kettenabbrechern und niedermolekularen, difunktionellen Kettenverlängerern, mit der Massgabe dass im Falle des Verzichts auf einen Kettenabbrecher mit einem bis zu 10%-igen Über- bzw. Unterschuss an Diisocyanat gearbeitet wird, dadurch gekennzeichnet, dass der Kettenverlängerer zu mindestens 10 Mol-% aus 2,2,4-Trimethylpentandiol-1,3 besteht und die übrigen Kettenverlängerungsmittel mit Molekulargewichten von 62 bis 399, (vorzugsweise 62 bis 250), vorzugsweise Diole, darstellen.

Gegenstand der vorliegenden Erfindung ist ferner ein Verfahren zur Herstellung von Polyurethanen aus Makrodiolen, wie Polyestern, Polycarbonaten und Polyethern, aromatischen Diisocyanaten, gegebenenfalls kettenabbrechenden monofunktionellen Verbindungen und Kettenverlängerern, dadurch gekennzeichnet, dass

i) 1 Mol eines Makrodiols mit einem Molgewicht von 400–5000, vorzugsweise 500–3000,

ii) 0,5–15 Mol difunktionelle Hydroxylverbindungen mit einem Molekulargewicht von 62 bis 399, die

ii/a) zu $\geq$ 10 Mol-% bis 100 Mol-%, bevorzugt $\geq$ 40 Mol-%, aus 2,2,4-Trimethyl-pentandiol-1,3 und gegebenenfalls

ii/b) zu 90 bis 0 Mol-% aus anderen Kettenverlängerungsmitteln mit Molekulargewichten von 62 bis 399, bevorzugt aus Diolen und gegebenenfalls geringeren Mengen an Diaminen, insbesondere Isophor ondiamin bestehen,

iii) gegebenenfalls 0,01 bis 1 Mol einer monofunktionellen Verbindung mit reaktiven Endgruppen, vorzugsweise OH–, NH–, $NH_2$–, =NOH– oder –NCO-Gruppen aufweisenden Verbindung mit 1–18 Kohlenstoffatomen, besonders bevorzugt einer Monohydroxyverbindung,

iv) 1,5–16,5 Mol eines aromatischen Diisocyanates, mit der Massgabe dass im Falle des Verzichts auf einen Kettenabbrecher mit einem bis zu 10%-igen Über- bzw. Unterschuss an Diisocyanat gearbeitet wird,

v) gegebenenfalls unter Zuhilfenahme eines Lösungsmittels oder Lösungsmittelgemisches, das bevorzugt aromatische Kohlenwasserstoffe enthält, bei Temperaturen von 50 bis 180, vorzugsweise 60 bis 120 °C umsetzt.

Gegenstand der vorliegenden Erfindung ist schliesslich die Verwendung der Polyurethane der beanspruchten Zusammensetzung bzw. nach dem beanspruchten Herstellungsverfahren zur Herstellung von Überzügen auf flexiblen Substraten, die gegebenenfalls mit – vorzugsweise magnetisierbaren – Pigmenten gefüllt sind und gegebenenfalls vernetzt werden.

Für das erfindungsgemässe Verfahren geeignete, im Sinne der Isocyanatpolyadditionsreaktion difunktionelle, endständige und gegenüber Isocyanat reaktionsfähige Gruppen aufweisende Verbindungen des Molekulargewichtsbereichs 400–5000, vorzugsweise 500–3000, sind insbesondere Dihydroxyverbindungen (Makrodiole) wie

1. die in der Polyurethan-Chemie an sich bekannten Dihydroxypolyester aus Dicarbonsäuren, z.B. Bernsteinsäure. Adipinsäure, Korksäure, Azelainsäure, Sebacinsäure, Phthalsäure, Isophthalsäure, Terephthalsäure, Tetrahydrophthalsäure usw. und Diolen, wie z.B. Ethylenglykol, Propandiol-1,2 Propandiol-1,3, Diethylenglykol, Butandiol-1,4, Hexandiol-1,6, Octandiol-1,8, Neopentylglykol, 2-Methylpropandiol-1,3, oder verschiedenen isomeren Bishydroxymethylcyclohexane;

2. die in der Polyurethan-Chemie an sich bekannten Polylactone, wie z.B. die auf den obengenannten zweiwertigen Alkoholen gestarteten Polymerisate des Caprolactons;

3. die in der Polyurethan-Chemie an sich bekannten Polycarbonate, wie sie durch Umsetzung beispielsweise der obengenannten Diole mit Diarylcarbonaten oder Phosgen zugänglich sind;

4. die in der Polyurethan-Chemie an sich bekannten Polyether, wie z. B. die unter Verwendung von zweiwertigen Startermolekülen, wie Wasser, den obengenannten Diolen oder 2 NH-Bindungen aufweisenden Aminen hergestellten Polymerisate bzw. Mischpolymerisate des Tetrahydrofurans, Styroloxids, Propylenoxids, Ethylenoxids, der Butylenoxide oder des Epichlorhydrins. Ethylenoxid wird vorzugsweise anteilsmässig mitverwendet mit der Massgabe, dass der verwendete Polyether maximal ca. 10 Gew.-% an Ethylenoxid enthält. Im allgemeinen werden jedoch solche Polyether eingesetzt, die ohne Mitverwendung von Ethylenoxid erhalten wurden.

Die für das erfindungsgemässe Verfahren geeigneten Diisocyanate iv) sind solche der allgemeinen Formel Q $(NCO)_2$, in denen Q einen zweiwertigen aromatischen Rest mit 6–18 Kohlenstoffatomen und einen oder mehreren Kernen darstellt und in denen die Isocyanatgruppen direkt an das oder die Ringsysteme gebunden sind. Typische Vertreter sind 1,5-Diisocyanatonaphthalin, 2,4- und 2,6-Diisocyanatotoluol und die aus diesen Isomeren bestehenden Gemische, 4,4'-. und 2,4'- und 2,2'-Diisocyanatodiphenylmethan sowie Derivate davon, in denen die Phenylringe ein- oder mehrfach mit Alkylresten substituiert sind. Die Diphenylmethandiisocyanate sind besonders bevorzugt.

Zur Begrenzung des Molgewichts der erfindungsgemässen Polyurethane können gegebenenfalls kettenabbrechende monofunktionelle Verbindungen iii) herangezogen werden. Dies können im Prinzip auch monofunktionelle Isocyanate sein; in der Praxis sind aber monofunktionelle Hydroxylverbindungen bevorzugt. Auch Monoamine – primäre und sekundäre – sind für diesen Zweck geeignet, aber weniger bevorzugt. Unter den Monohydroxylverbindungen sind aliphatische Alkohole wie Butanol, Hexanol, Ethylhexanol, Stearylalkohol geeignet. Es können jedoch auch andere Hydroxylverbindungen, etwa Oxime, verwendet werden, so z. B. Butanonoxim. Diese Kettenabbrecher können in Mengen von 0,01 Mol bezogen auf 1 Mol des Makrodiols bis zu Mengen von 1 Mol eingesetzt werden, wenn die Herstellung von kurzkettigen Oligourethanen erwünscht ist.

Der Kettenverlängerer 2,2,4-Trimethylpentandiol-1,3 ii/a) kann teilweise durch andere Diole ii/b) ersetzt werden. Dies können z. B. Ethylenglykol, Butandiol-1,4, Butandiol-1,3, Hexandiol-1,6, 2,2-Dimethylpropandiol, Undecandiol-1,3 oder 1-Hydroxy-3-hydroxymethyl-3,3,5-trimethyl-cyclohexan sein. Mindestens 10 Mol-%, bevorzugt $\geqslant$ 40 Mol-%, des Kettenverlängerergemisches beträgt jedoch der Anteil des 2,2,4-Trimethylpentandiol-1,3. Besonders bevorzugt sind Polyurethane, in denen Trimethylpentandiol durch 0 bis 25 Mol-% anderer Diole ii/b) ausgetauscht ist und gegebenenfalls kleinere Mengen an Isophorondiamin zur Kettenverlängerung mitverwendet wird.

Die zu verwendende Menge an Diolen ii) kann von 0,5 bis 15 Mol pro Mol Makrodiol i) betragen, je nachdem, ob ein sehr weiches oder sehr hartes, oder eine beliebige Zwischeneinstellung eines erfindungsgemässen Polyurethans gewünscht wird.

Die Herstellung der erfindungsgemässen Polyurethane kann sowohl in Gegenwart als auch in Abwesenheit eines Lösungsmittels erfolgen. In beiden Fällen kann so vorgegangen werden, dass das Gemisch der Komponenten i), ii) und gegebenenfalls iii) mit einer stöchiometrischen Menge des Diisocyanats iv) umgesetzt wird. Es kann aber auch aus i) und iv) erst ein sogenanntes Prepolymer gebildet werden, welches dann mit dem Kettenverlängerer ii) umgesetzt und gegebenenfalls anschliessend oder gleichzeitig auch mit dem Kettenabbrecher iii) versetzt wird. Schliesslich ist es generell bei Verzicht auf den Einsatz des Kettenabbrechers möglich, mit einem Unter- oder Überschuss an Diisocyanat zu arbeiten, der in beiden Fällen bis zu 10%, vorzugsweise bis zu 5%, betragen kann und sich auf die stöchiometrische Einsatzmenge, bezogen auf die Summe aller Hydroxylkomponenten, bezieht. Bevorzugt ist hier ein Unterschuss.

Wird ohne Lösungsmittel gearbeitet, so empfiehlt sich, nach dem «one-shot»-Verfahren vorzugehen. Hierbei werden alle an der Reaktion beteiligten Komponenten bei leicht erhöhter Temperatur (ca. 50 °C) vermischt und in einen, gegebenenfalls mit Trennmittel behandelten Behälter gegossen. Die Mischung kann dann bei 60–180 °C, vorzugsweise 80–150 °C, getempert werden, was etwa 6–12 Stunden in Anspruch nehmen kann. Nach dem Erstarren und Abkühlen kann das gegossene Polyurethan zerkleinert und aufgelöst werden.

In Lösung lässt sich sowohl nach dem «one-shot»- als auch nach dem Prepolymerverfahren arbeiten. Das erste Verfahren wird zweckmässigerweise so ausgeführt, dass die Hydroxylkomponenten vorgelegt und schrittweise mit Portionen des Diisocyanats in der Wärme umgesetzt werden. Hierbei zieht die Viskosität der Mischung stark an; sie kann durch portionsweises Zugeben eines oder mehrerer Lösungsmittel wieder auf niedrigere Werte gesenkt werden.

In Lösung kann auch das oben beschriebene Prepolymer-Verfahren durchgeführt werden.

Unter den für die Lösung der Polyurethane bzw. Durchführung des erfindungsgemässen Verfahrens geeigneten Lösungsmitteln sind aromatische Kohlenwasserstoffe besonders geeignet. Zu ihnen gehören beispielsweise Toluol, die verschiedenen isomeren Xylole, Ethylbenzol und die isomeren Diethylbenzole sowie auch durch Erdölfraktionierung erhaltene technische Aromatengemische. Sie lassen sich, falls gewünscht, mit weiteren Lösungsmitteln verschneiden, bevorzugt mit ebenfalls nur schwach polaren wie Ketonen oder Estern. Unter den Ketonen sind acyclische Ketone mit bis zu 8 C-Atomen, insbesondere Aceton, Methylethylketon, Methylisobutylketon und Methylamylketon bevorzugt. Cyclische Ketone wie Cyclohexanon können mitverwendet werden, sind aber aus den oben angeführten Gründen weniger bevorzugt. Als Ester lassen sich relativ niedrigsiedende Ester von $C_1$- bis $C_6$-Carbonsäuren mit $C_1$- bis $C_8$-Alkoholen (wobei jedoch die Gesamtsumme der C-Atome aus Carbonsäure und Alkohol nicht über 10 liegen soll), beispielsweise Ethylacetat, Butylacetat, 2-Ethylhexylacetat usw. verwenden; weniger bevorzugt sind hier die ethergruppentragenden Carbonsäureester der Alkoxyethylenglykole und Alkoxypropylenglykole mit Carbonsäuren.

Die aromatischen Kohlenwasserstoffe können bis 75%, vorzugsweise bis 50%, an den genannten polaren Ketonen oder Estern enthalten.

Ebenfalls möglich, aber nicht bevorzugt ist der Einsatz stärker und stark polarer Lösungsmittel wie etwa der bereits erwähnten cyclischen Ether und Lösern wie Dimethylsulfoxid, Dimethylformamid und N-Methylpyrrolidon. Aus Gründen, die weiter unten dargelegt werden, ist schliesslich die Mitverwendung von $C_1$–$C_8$-Alkoholen, insbesondere sekundären Alkoholen (wie Isopropanol, Isobutanol) oder tertiären Alkoholen (wie tert.-Butanol oder tert.-Amylalkohol) als Lösungsmittel im Prinzip möglich, aber in der Praxis nicht erwünscht.

Die erfindungsgemässen Polyurethane können in Lösungen hergestellt oder zu solchen aufgelöst werden, deren Konzentration von 20–90% betragen und die einen weiten Viskositätsbereich von wenigen 100 bis mehreren 10 000 mPa.s aufweisen. Die Viskosität ist im wesentlichen von Konzentration und Molekulargewicht der Polyurethane abhängig.

Die Lösungen können in bekannter Weise gegebenenfalls nach Zusatz von Pigmenten, Verlauf- und Mattierungsmittel sowie weiterer im Prinzip bekannter Lackhilfsmittel auf Substrate durch Sprühen, Walzen, Giessen, Tauchen oder Streichen aufgetragen werden. Als Substrate können neben den bevorzugten flexiblen und nicht-flexiblen Kunststoffen in kompakter oder geschäumter Form auch solche wie beschichtete und unbeschichtete textile Gebilde, Leder, Papier, Karton, Holz und mineralische Untergründe sowie Metalle eingesetzt werden. Eine bevorzugte Ausführungsform der vorliegenden Erfindung ist das Auftragen durch Giessen der mit magnetisierbaren Partikeln wie $\gamma$-Ferrit, Magnetit, auch in mit z.B. Cobalt dotierter Form oder mit Reineisenpartikeln gefüllten Polyurethanlösung auf laminare Träger, z.B. Polyesterfolien. Aus diesen beschichteten Folien lassen sich ausschliesslich magnetische Informationsträger in Disketten- oder Bandform herstellen, die zur Aufzeichnung von Audio-, Video- und Computerinformationen geeignet sind. Bei der Herstellung solcher Magnetbänder wird grosser Wert auf hohe Abriebfestigkeit und Beständigkeit gegenüber Reinigungsmitteln, z.B. Alkoholen, gelegt.

Obwohl die erfindungsgemässen Polyurethane ausreagiert und einwandfrei filmbildend sind, ist ihre Lösungsmittelbeständigkeit wegen ihres im wesentlichen linearen Aufbaus begrenzt. Wo sie gefordert wird, ist, wie in der einschlägigen Technik bekannt, der Zusatz von vernetzenden Verbindungen ratsam. Dies können sowohl thermisch aktivierbare Harzkomponenten wie teilweise oder vollständig mit Monoalkoholen wie Methanol oder Butanolen veretherte Melamin- oder Harnstoffformaldehydharze, Melaminhexamethylolether oder blockierte Polyisocyanate oder Isocyanatprepolymere oder Polyaziridinverbindungen sein.

Auf thermosensiblen Substraten wird dagegen häufig eine Nachvernetzung mit unblockierten Polyisocyanaten durchgeführt, die durch Luftfeuchtigkeit bewirkt wird und sich über mehrere Tage hinziehen kann. Dies bedeutet, dass der getrocknete Film zwar gebrauchsfertig und weiterverarbeitbar ist, seine endgültige Beständigkeit aber erst nach einer gewissen Zeit erreicht.

Solche Polyisocyanate können z.B. Umsetzungsprodukte aus Diisocyanaten wie 2,4- und 2,6-Diisocyanatotoluol, 1,6-Diisocyanatohexan, 1-Isocyanato-3-isocyanatomethyl-3,5,5-trimethylcyclohexan oder 4,4'-Diisocyanatodicyclohexylmethan sowie deren Gemischen mit Triolen wie Trimethylolpropan, Trimethylolethan, Hexantriol oder Glycerin, Isocyanuratgruppen aufweisende Polyisocyanate, beispielsweise aus den oben erwähnten Diisocyanaten, sowie die an sich bekannten Biuretpolyisocyanate und Allophanatpolyisocyanate sein.

Werden solche Vernetzer mit freien Isocyanatgruppen eingesetzt, so ist, wie oben bereits ausgeführt, die Verwendung von Alkoholen als Co-Löser nicht ratsam, da diese den Vernetzer in kurzer Zeit unwirksam machen.

Beispiel 1

900 Teile eines Butandiolpolyadipats (OH-Zahl: 124) und 438 Teile 2,2,4-Trimethylpentandiol-1,3 werden bei etwa 50 °C geschmolzen und mit 975 Teilen 4,4'-Diisocyanatodiphenylmethan (MDI) versetzt. Die Mischung wird auf 80 °C erhitzt und gerührt, wobei die Viskosität langsam ansteigt. Zur Verbesserung der Rührbarkeit werden nach und nach 200 Teile-Portionen Toluol zugesetzt, bis die Konzentration nach Zugabe von insgesamt 3400 Teilen Toluol 40,5% beträgt. Nun wird durch Zugabe von jeweils 2 Teilen MDI nach und nach die Viskosität auf 1000 mPas eingestellt. Nach dem Abkühlen auf 21 °C steigt die Viskosität dann auf 13000 mPas/21 °C.

Die erhaltene Lösung ist klar und lässt sich mit Toluol, Xylol oder Methylethylketon weiterverdünnen. Nach dem Auftrocknen ist ein nass mit etwa 100 µm Stärke aufgetragener Film weich und elastisch.

Beispiel 2

2600 Teile eines Diethylenglykolpolyadipats-(OH-Zahl: 43), 148 Teile, 2,2,4-Trimethylpentandiol-1,3 und 208 Teile Neopentylglykol werden bei etwa 50 °C geschmolzen und mit 1050 Teilen 4,4'-Diisocyanatodiphenylmethan (MDI) versetzt. Die Mischung wird auf 80 °C erhitzt und gerührt, wobei

die Viskosität langsam ansteigt. Nach und nach werden nun 7010 Teile Toluol zugesetzt und die Reaktion fortgesetzt, bis der NCO-Gehalt konstant ist.

(Dies lässt sich der geringen Höhe wegen nur IR-spektroskopisch feststellen.) Nun werden 2100 Teile Methylethylketon (MEK) zugesetzt und die Lösung auf Raumtemperatur abgekühlt. Sie besitzt nun eine Viskosität von 1500 mPas. Aus 34 Teilen 1-Amino-3-amino-methyl-3,5,5-trimethylcyclohexan (IPDA) und 230 Teilen MEK wird nun eine Lösung bereitet und von dieser unter Rühren langsam soviel zu der Polymerlösung zugegeben, dass die Viskosität schliesslich 15 000 mPas beträgt.

Man erhält eine 30%ige klare Lösung des Polyurethans in Toluol/MEK 3:1. Ein nach Auftrocknen von 100 µm Nassauftrag erhaltener Film ist klar, weich und hochdehnbar.

Beispiel 3 (Vergleichsbeispiel)

Nach der Verfahrensweise des Beispiels 2 wird aus 2600 Teilen Diethylenglykolpolyadipat (OH-Zahl: 43), 312 Teilen Neopentylglykol, 1050 Teilen MDI, 34 Teilen IPDA, 6930 Teilen Toluol und 2310 Teilen MEK eine Polyurethanlösung angefertigt, deren Viskosität etwa 9000 mPas/25 °C beträgt. Die Lösung ist trübe, da das Polyurethan sich nicht vollständig in den Lösungsmitteln löst.

Beispiel 4

2600 Teile des in Beispiel 2 beschriebenen Polyesterdiols und 1460 Teile 2,2,4-Trimethylpentandiol-1,3 werden bei 50 °C geschmolzen und mit 2600 Teilen 4,4'-Diisocyanatodiphenylmethan (MDI) vermischt. Die Temperatur wird auf 80 °C erhöht und die Mischung gerührt. Beim allmählichen Anstieg der Viskosität werden in Portionen insgesamt 10 120 Teile Toluol zugesetzt. Mit weiteren 20 Teile-Zugaben von MDI wird die Viskosität allmählich auf etwa 2000 mPas erhöht. Nun wird mit 2530 Teilen Methylethylketon verdünnt und abgekühlt.

Es entsteht eine 35%ige klare Lösung in Toluol/Methylethylketon (4:1) mit einer Viskosität von 8000 mPas/25 °C.

Aus dieser Lösung kann einer klarer Polyurethanfilm erzeugt werden, der sehr hart, aber noch biegsam ist.

## Patentansprüche

1. In aromatischen Kohlenwasserstoffen oder aromatische Kohlenwasserstoffe enthaltenden Gemischen lösliche, im wesentlichen lineare Polyurethane aus höhermolekularen Makrodiolen mit einem Molgewicht von 400–5000, aromatischen Diisocyanaten, gegebenenfalls 0,01–1,0 Mol (bezogen auf 1 Mol Hydroxylpolyester und/oder -polyether) an kettenabbrechenden, im Sinne der Isocyanatpolyaddition monofunktionellen Verbindungen und difunktionellen Kettenverlängerern mit Molgewichten von 62 bis 399, mit der Massgabe dass im Falle des Verzichts auf einen Kettenabbrecher mit einem bis zu 10%-igen Über- bzw. Unterschuss an Diisocyanat gearbeitet wird, dadurch gekennzeichnet, dass der Kettenverlängerer zu 10–100 Mol-% aus 2,2,4-Trimethylpentandiol-1,3 besteht.

2. Polyurethane nach Anspruch 1, dadurch gekennzeichnet, dass der Kettenverlängerer zu 40–100 Mol-% aus 2,2,4-Trimethylpentandiol-1,3 besteht und die restlichen Kettenverlängerungsmittel Diole mit Molekulargewichten von 62 bis 399 darstellen.

3. Polyurethane nach Anspruch 1, dadurch gekennzeichnet, dass der Kettenverlängerer zu 75–100 Mol-% aus 2,2,4-Trimethylpentandiol-1,3 besteht und die restlichen Kettenverlängerungsmittel Diole mit Molekulargewichten von 62 bis 399 darstellen.

4. Verfahren zur Herstellung von in aromatischen Kohlenwasserstoffen enthaltenden Gemischen löslichen, linearen Polyurethanen aus höhermolekularen Makrodiolen, aromatischen Diisocyanaten, gegebenenfalls kettenabbrechenden, im Sinne der Isocyanatpolyaddition monofunktionellen Verbindungen und Kettenverlängerern, dadurch gekennzeichnet, dass

i) 1 Mol eines Hydroxylpolyesters und/oder -polyethers mit einem Molgewicht von 400–5000,

ii) 0,1–15 Mol aus difunktionellen Hydroxylverbindungen mit einem Molgewicht von 62–399, das zu 10–100 Mol-% aus 2,2,4-Trimethylpentandiol-1,3 besteht und die restlichen Kettenverlägerungsmittel Diole mit Molekulargewichten von 62 bis 399 darstellen,

iii) gegebenenfalls 0,01 bis 1 Mol eines kettenabbrechenden, im Sinne der Isocyanatpolyaddition monofunktionellen Verbindung mit 1–18 Kohlenstoffatomen und

iv) 1,5 bis 16,5 Mol eines aromatischen Diisocyanats, mit der Massgabe dass im Falle des Verzichts auf einen Kettenabbrecher mit einem bis zu 10%-igen Über- bzw. Unterschuss an Diisocyanat gearbeitet wird,

v) gegebenenfalls unter Zuhilfenahme eines Lösungsmittel oder Lösungsmittelgemisches, das aromatische Kohlenwasserstoffe enthält,

bei Temperaturen von 50–180 °C umgesetzt werden.

5. Verwendung der Polyurethane nach Ansprüchen 1 bis 4 für die Herstellung von gegebenenfalls mit Pigmenten gefüllten und gegebenenfalls vernetzten Überzügen auf flexiblen und nicht flexiblen Substraten.

6. Verwendung nach Anspruch 5, dadurch gekennzeichnet, dass die Überzüge mit magnetisierbaren Pigmenten gefüllt sind.

7. Verwendung nach Ansprüchen 5 und 6, dadurch gekennzeichnet, dass die Polyurethane in Form ihrer Lösung in aromatischen Kohlenwasserstoffen oder eines Lösungsmittelgemisches, das aromatische Kohlenwasserstoffe enthält, verwendet werden.

8. Verwendung nach Ansprüchen 5 bis 7, dadurch gekennzeichnet, dass die Überzüge auf Folien aufgebracht sind und gegebenenfalls durch mit Monoalkoholen partiell oder vollständig veretherten Melamin- oder Harnstoff-Formaldehydharzen, Melaminhexamethylolether, unblockierte oder blockierte Polyisocyanate oder Isocyanatprepolymere oder Polyaziridinverbindungen vernetzt werden.

**Claims**

1. Substantially straight chained polyurethanes which are soluble in aromatic hydrocarbons or mixtures containing aromatic hydrocarbons, which polymers are obtained from relatively high molecular weight macrodiols with a molecular weight of from 400 to 5,000, aromatic diisocyanates, optionally from 0.01 to 1.0 mol (based on 1 mol of hydroxyl-polyesters and/or-polyethers) of chain breaking compounds which are monofunctional in isocyanate polyaddition reactions and difunctional chain lengthening agents with molecular weights of from 62 to 399 under the condition that when no chain breaking agent is used, the diisocyanate is used in an excess or subequivalent amount of up to 10%, characterised in that the chain lengthening agent consists to an extent of 10 to 100 mol% of 2,2,4-trimethylpentandiol-(1,3).

2. Polyurethanes according to claim 1, characterised in that the chain lengthening agent consists to an extent of 40 to 100 mol% of 2,2,4-trimethylpentandiol-(1,3) and the remaining chain lengthening agents are diols with molecular weights of from 62 to 399.

3. Polyurethanes according to claim 1, characterised in that the chain lengthening agent consists to an extent of 75 to 100 mol% of 2,2,4-trimethylpentandiol-(1,3) and the remaining chain lengthening agents are diols with molecular weights of from 62 to 399.

4. Process for the preparation of straight chained polyurethanes which are soluble in mixtures containing aromatic hydrocarbons from relatively high molecular weight macrodiols, aromatic diisocyanates, optionally chain breaking compounds which are monofunctional in isocyanate polyaddition reactions and chain lengthening agents, characterised in that

i) 1 mol of a hydroxyl-polyester and/or -polyether having a molecular weight of from 400 to 5000,

ii) 0.1 to 15 mol of difunctional hydroxyl compounds having a molecular weight of from 62 to 399 consisting to an extent of 10 to 100 mol% of 2,2,4-trimethylpentanediol-(1,3), the remaining chain lengthening agents being diols with molecular weights of from 62 to 399,

iii) optionally from 0.01 to 1 mol of a chain breaking compound containing 1 to 18 carbon atoms which is monofunctional in polyaddition reactions, and

iv) 1.5 to 16.5 mol of an aromatic diisocyanate, under the condition that when no chain breaking agent is used, the diisocyanate is used in an excess or subequivalent amount of up to 10%,

v) optionally with the aid of a solvent or solvent mixture containing aromatic hydrocarbons are reacted at temperatures from 50 to 180 °C.

5. Use of the polyurethanes according to claims 1 to 4 for the production of coatings which are optionally filled with pigments and are optionally cross-linked on flexible and non-flexible substrates.

6. Use according to claim 5, characterised in that the coatings are filled with magnetisable pigments.

7. Use according to claims 5 and 6, characterised in that the polyurethanes are used in the form of their solutions in aromatic hydrocarbons or in a solvent mixture containing aromatic hydrocarbons.

8. Use according to claims 5 to 7, characterised in that the coatings are applied to films and optionally cross-linked with melamine- or urea-formaldehyde resins which are partially or completely etherified with monohydric alcohols, melamine hexamethylol ether, blocked or unblocked polyisocyanates or isocyanate prepolymers or polyaziridine compounds.

**Revendications**

1. Polyuréthanes essentiellement linéaires solubles dans des hydrocarbures aromatiques ou dans des mélanges contenant des hydrocarbures aromatiques et formés à partir de macrodiols de poids moléculaire très élevé ayant un poids moléculaire de 400 à 5.000, de diisocyanates aromatiques, éventuellement de 0,01–1,0 mole (rapporté à 1 mole d'hydroxy-polyester et/ou d'hydroxy-polyéther) d'agents d'allongement de chaîne difonctionnels et de composés monofonctionnels rupteurs de chaîne dans le sens de la polyaddition d'isocyanates, ayant des poids moléculaires de 62 à 399, avec cette réserve que, dans le cas où l'on renonce à un agent rupteur de chaîne, on travaille avec une quantité excédentaire ou déficitaire allant jusqu'à 10% en diisocyanate, caractérisés en ce que l'agent d'allongement de chaîne est constitué de 10 à 100% molaires de 2,2,4-triméthylpentane-diol-1,3.

2. Polyuréthanes selon la revendication 1, caractérisés en ce que l'agent d'allongement de chaîne est constitué de 40 à 100% molaires de 2,2,4-triméthylpentane-diol-1,3, tandis que les agents résiduels d'allongement de chaîne sont des diols ayant des poids moléculaires de 62 à 399.

3. Polyuréthanes selon la revendication 1, caractérisés en ce que l'agent d'allongement de chaîne est constitué de 75 à 100% molaires de 2,2,4-triméthylpentane-diol-1,3, tandis que les agents résiduels d'allongement de chaîne sont des diols ayant des poids moléculaires de 62 à 399.

4. Procédé de préparation de polyuréthanes linéaires solubles dans des mélanges contenant des hydrocarbures aromatiques et formés à partir de macrodiols de poids moléculaire très élevé, de diisocyanates aromatiques, éventuellement d'agents d'allongement de chaîne et de composés monofonctionnels dans le sens de la polyaddition

d'isocyanate et rupteurs de chaîne, caractérisé en ce qu'on fait réagir:

i) 1 mole d'un hydroxypolyester et/ou d'un hydroxypolyéther d'un poids moléculaire de 400 à 5.000,

ii) 0,1–15 moles de composés hydroxyle difonctionnels d'un poids moléculaire de 62–399 constitués de 10–100% molaires de 2,2,4-triméthylpentanediol-1,3, tandis que les agents résiduels d'allongement de chaîne sont des diols ayant des poids moléculaires de 62 à 399,

iii) éventuellement 0,01 à 1 mole d'un composé monofonctionnel dans le sens de la polyaddition d'isocyanate, rupteur de chaîne et contenant 1 à 18 atomes de carbone, et

iv) 1,5 à 16,5 moles d'un diisocyanate aromatique, avec cette réserve que, dans le cas où l'on renonce à un agent de rupture de chaîne, on travaille avec une quantité excédentaire ou déficitaire allant jusqu'à 10% en diisocyanate,

v) éventuellement à l'aide d'un solvant ou d'un mélange de solvants contenant des hydrocarbures aromatiques,

à des températures de 50 à 180 °C.

5. Utilisation des polyuréthanes selon les revendications 1 à 4, pour la formation, sur des substrats flexibles et non flexibles, de revêtements éventuellement chargés de pigments et éventuellement réticulés.

6. Utilisation selon la revendication 5, caractérisée en ce que les revêtements sont chargés de pigments magnétisables.

7. Utilisation selon les revendications 5 et 6, caractérisée en ce que les polyuréthanes sont utilisés sous forme de leur solution dans des hydrocarbures aromatiques ou sous forme d'un mélange de solvants contenant des hydrocarbures aromatiques.

8. Utilisation selon les revendications 5 à 7, caractérisée en ce que les revêtements sont appliqués sur des feuilles et en ce qu'ils sont réticulés éventuellement par des résines de mélamine- ou d'urée-formaldéhyde partiellement ou complètement éthérées avec des mono-alcools, des éthers de mélamine-hexaméthylol, des polyisocyanates bloqués ou non ou des prépolymères d'isocyanates ou encore des composés de polyaziridine.